# EUROPEAN PATENT APPLICATION

(11) **EP 2 072 100 A1**
(43) Date of publication of application: **24.06.2009**
(21) Application number: 07123879.4
(22) Date of filing: 20.12.2007
(51) Int. Cl.: B01D 1/22, B01D 1/26, B01D 5/00, C02F 1/14, B01D 1/00

(54) **A tilted multieffect distillation module with means for heating and cooling**

(71) Applicant: VKR Holding A/S, 2970 Hørsholm (DK)
(72) Inventor: Engelhart, Klaus, 3508 Höbenbach (AT)
(74) Representative: Rohde, Vibeke Warberg

(57) **Abstract**

The tilted multi effect distillation module according to the invention comprises a plurality of distillation stages. Each stage is defined by a first and a second sheet member arranged in parallel to each other, the second sheet member above the first sheet member, and by one or more frame members (5) enclosing the space between the sheet members. In addition each stage comprises an inlet (21) for supplying feed liquid to the upper surface of the first sheet member at one end thereof, at least one first outlet (31) for extracting residual water at the other end of the first sheet member, and at least one second outlet for extracting water condensating on the second sheet member. The sheet members are plane, uninterrupted plates of tempered glass. In preferred embodiments the module comprises a bottom element (6) forming a space between it and the lowermost sheet member, said space being connected to a heating fluid inlet. A corresponding top element may be connected to a cooling fluid inlet. Preferably the feed liquid is used as a cooling liquid. Separator members arranged between the sheet members may include inlets (21) and outlets (31) to/from the stages. The invention also relates to a system, where such a distillation module cooled by means of the feed liquid is combined with a solar collector of the thermo siphon type.

## Description

The present invention relates to a tilted multi effect distillation module comprising a plurality of distillation stages, each stage being defined by a first and a second sheet member arranged in parallel to each other, the second sheet member above the first sheet member, and by one or more frame members enclosing the space between the sheet members, and each stage comprising an inlet for supplying feed liquid to the upper surface of the first sheet member at one end thereof, at least one first outlet for extracting residual water at the other end of the first sheet member, and at least one second outlet for extracting water condensating on the second sheet member, and where the sheet member serving as the first sheet member of one stage also serves as the second sheet member in the stage located directly below it. The invention further relates to a system comprising such a module and to a method of increasing its efficiency.

Such a distillation module is known for example from WO2006/002636. Even though this module has many advantages in comparison with its predecessors it suffers from being of a technically demanding construction. This not only makes it expensive to make, it also limits the possibilities for local manufacturing in lesser-developed countries and for do-it-yourself maintenance and repairs.

It is therefore a first object of the invention to provide a tilted multi effect distillation module, which can be manufactured and maintained in a technically simpler manner.

In addition the module known from WO2006/002636 is still relatively inefficient in comparison with what is theoretically possible, both as regards the amount of distilled water produced with a given module and as regards the energy consumed per litre of water produced.

It is therefore a second object of the invention to provide a tilted multi effect distillation module, which displays an increased efficiency.

The first object is achieved with a module, where the sheet members are plane, uninterrupted plates of tempered glass. In most prior art systems, the sheet members are provided with one or more holes to allow the introduction and extraction of liquids and to provide a vapour connection between the different stages. This not only makes the manufacture of the sheet members more complicated, but surprisingly also makes the module less effective.

Moreover, the use of the uninterrupted plates allows a very simple and easy assembling of the module. The glass sheets can simply be clamped between plate-shaped side frame members, which are possibly covered with a sealing surface coating, for example neoprene. Alternatively they may be interconnected using a strip-like sealing, much in the same way as when making a two-sheet windowpane. In any case it is preferred if the module can be easily disassembled, e.g. by using a strip-like sealing which is attached to a sheet member only on one side.

Prior art distillation modules have often been made with sheet members of for example stainless steel covered with enamel. Sea water heated to a temperature of approximately 90°C will, however, soon penetrate microscopic holes or other weakenings in the enamel, causing corrosion of the steel. Glass, on the contrary, tolerates even very aggressive liquids without the need for any kind of surface coating and is almost totally inert, thus not giving anything off to the condensate, as would be the case with most synthetic materials.

In addition, tempered glass is available in virtually all parts of the world, whereas enamelled steel will have to be ordered from a specialist. Furthermore, the glass can be cut to size, whereas a surface coated material will have to be manufactured in the exact right size. Similar considerations apply to sheet members being encased in a frame of a plastic material as is known from WO2006/002636.

The simple construction and easy assembly of the module will usually prompt a more regular maintenance, which in return will increase its overall efficiency seen over a longer period of time, thus also achieving the second object of the invention.

To increase the efficiency even further it is, however, preferred to improve the heating of the lowermost side of the module. In WO2006/002636 the heating was achieved by solar heated water evaporating from an open tank underneath the module and condensating on its lowermost surface. This method is very simple, but heat lost from the tank decreases the energy reuse factor. According to the present invention it is instead suggested that the first sheet member of the lowermost stage rest on a bottom element, which comprises a bottom plate and one or more distance members keeping the first sheet member at a predetermined distance from the bottom plate, so that a space is formed between them, said space being connected to a heating fluid inlet at the top of the bottom element and to a heating fluid outlet at the bottom of the bottom element. When a hot fluid is led trough the heating fluid inlet, it enters the space between the bottom plate and the lowermost sheet member, thus coming into direct contact with the latter and heating it directly.

In a preferred embodiment distance members arranged between the bottom plate and the lowermost sheet member define a bottom frame surrounding the space between the bottom plate and the first sheet member, said frame providing a seal towards the ambient, and where the heating fluid inlet and the heating fluid outlet are formed in the bottom frame. In this way a closed space is achieved in a very simple manner. The inlet and outlet being integrated in the distance member frame means, that uninterrupted plates can be used for both the sheet member and the bottom plate, which leads to a particularly simple and cheap design.

To increase the amount of heat transferred from the heating fluid to the sheet member to contact time should be as long as possible. In a preferred embodiment of the invention, this is achieved by arranging the distance members so that they define a serpentine path from the heating fluid inlet to the heating fluid outlet.

The temperature difference between the upper and lower sheet member of each stage and thus also between the upper and lower side of the entire module has been shown to be one of the most important factors in increasing the efficiency of the system. It is therefore advantageous not only to supply as much energy to the lowermost stage as possible, but also to keep the uppermost stage as cold as possible. In most prior art systems this is achieved by shading the upper side of the module and possibly establishing an air flow over the upper side. In a very hot climate this may, however, not be very efficient and it is therefore suggested to cool the upper side with a liquid. For this purpose the module according to the invention can be equipped with a top element corresponding closely to the bottom element described above, but intended for leading a cooling liquid over the outer surface of the uppermost sheet member.

A more traditional system of copper tubing or the like may of course also be used for the heating and cooling described above, but due to the poorer contact with the sheet member surface, this will be less efficient.

When the feed liquid enters the module a certain amount of energy is used for heating it to its boiling point, and the temperature of the stage is thereby reduced correspondingly leading to a decrease in the temperature difference. This can of course be countered by increasing the heat applied to the underside of the module, but a similar effect may be achieved by heating the feed liquid before feeding it to the module. In some prior art systems this has been done in a heat exchanger, where heat is transferred from the condensate, which is very hot when exiting the module, to the feed liquid. This, however, makes the system technically more complicated and more expensive.

According to the present invention the cooling therefore is instead achieved by leading the feed liquid over the upper side of the module, thus using the excess heat radiating from the uppermost stage for heating the feed liquid, the fluid inlet being connected to a feed liquid source and the cooling fluid outlet being connected to the inlet of at least one stage. In this way the reuse of energy is taken even a step further in that no additional energy has to be supplied for heating the feed liquid and that virtually no energy is lost in the form of waste heat.

In the first stage of a multiple effect distillation system, temperatures should at optimum be close to the boiling point and the optimum temperature difference form stage to the next will normally be approximately 3-5°C. At temperatures below 50°C the evaporation ratio and vapour content in air are so low that the amount of condensate produced is not sufficiently large to justify another stage. The number of stages will therefore normally be limited to approximately 10-15.

When feeding the feed liquid to the stages it is important to make sure, that it does not come into contact with the condensed liquid. It is therefore preferred that one or more separator members are arranged between the two sheet members of each stage.

In a particularly preferred embodiment of the invention the inlet is formed in or connected to a top separator member and the second outlet, intended for the condensed liquid, is formed in or connected to a bottom separator member. The bottom separator member should also be shaped so that non-evaporated liquid can pass beneath it and exit the module.

Each separator member preferably seals the stage against the ambient, so that no separate sealing is necessary at the top and the bottom of the stage.

Such separator members can easily be made from plastic by injection moulding as will be explained in further detail below. When serving as sealing, a rubber strip can be added.

When assembling the module, the separator members may also serve as distance keepers, keeping the two sheet members apart. In this way all functionalities necessary for each stage is integrated in the separator member. The module can thus be build by simple stacking a series of elements, which can each be made locally from common materials and at low cost.

The heating fluid use for heating the module may in principle come from any available source, such as a geothermal water, but in a preferred embodiment the module is used together with a solar collector of the thermo siphon type.

In a solar collector of the siphon type the circulation of the fluid within the siphon is achieved by fluid flowing from a storage tank down along the solar panel under the influence of gravity and rising back up into the tank when it has been heated sufficiently for the thermo dynamical effects to overcome the force of gravity. There is thus no need for pumps or the like, which has to be powered.

The distillation module may advantageously be arranged underneath the solar collector, where it is shaded from the sun. In this way the piping needed for connecting the two can also be kept as short as possible leading to a minimal heat loss, particularly if the distillation module is attached to the underside of the solar collector. In this way the distillation module and the solar collector may form a unit capable of supplying both freshwater made by distillation and hot water.

Depending on the location of the source of the feed liquid a pump may be necessary for supplying the feed liquid to the distillation module. In such cases the system may include a photovoltaic element supplying energy to the pump, thus making the system independent of external power sources, which may not be available or be unreliable.

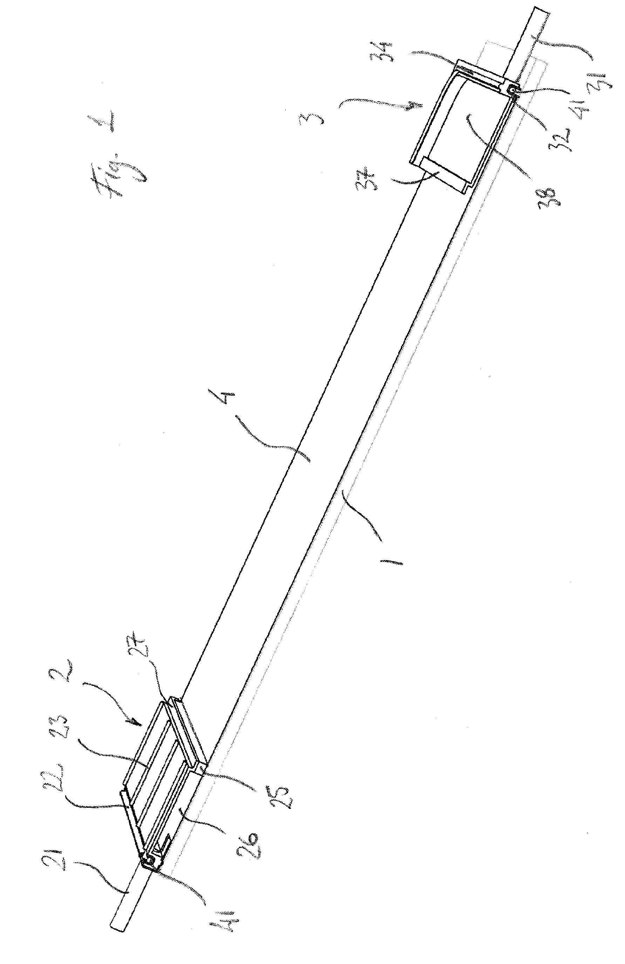

In the following the invention will be described in more detail by way of an exemplary embodiment shown in the drawing. In the drawing
Fig. 1 shows a cross sectional view of single stage of a module according to the invention,
Fig. 2 shows a cross sectional view of a module according to the invention, where three stages has been mounted,
Fig. 3 shows a bottom element for leading the heating fluid along the lowermost surface of the lowermost stage,
Fig. 4 shows top separator member,
Fig. 5 shows a bottom separator member, and
Fig. 6 shows a schematic sketch of a distillation system according to the invention.

The distillation module according to the invention is formed by a series of stages, which in the preferred embodiment each comprises a glass plate 1, a top separator member 2 and a bottom separator member 3.

The glass must be tempered to be able to withstand the sudden increase in temperature, when distillation is initiated and hot feed liquid is entering the not yet heated system.

An inlet 21 for supplying feed liquid to the stage is integrated in the top separator member and an outlet 31 for extracting condensate is integrated in the bottom separator. Both separator members are preferably made by injection moulding and the inlet and outlet, respectively, can be a part of the moulded item, be embedded in the moulding material or be attached subsequently.

For the purpose of securing an even flow of the feed liquid, which may be sea water or any other liquid to be distilled, the glass plate 1 is covered by a piece of fabric 4, preferably a non-woven, also known as a wick, which absorbs the liquid and thus prevents the formation of streams. In addition the fabric has a larger surface area than the glass, meaning that the condensation surface is considerably increased. The fabric is kept in place by being attached to the top and bottom separator members. In this embodiment is achieved by clamping the fabric between a rod 41 and a groove 22, 32 in the separator member, but other means of attachment may of course be employed.

A similar effect could be obtained by etching a pattern, such as grooves, in the surface of the glass, but this method is much more expensive and does not lead to better results.

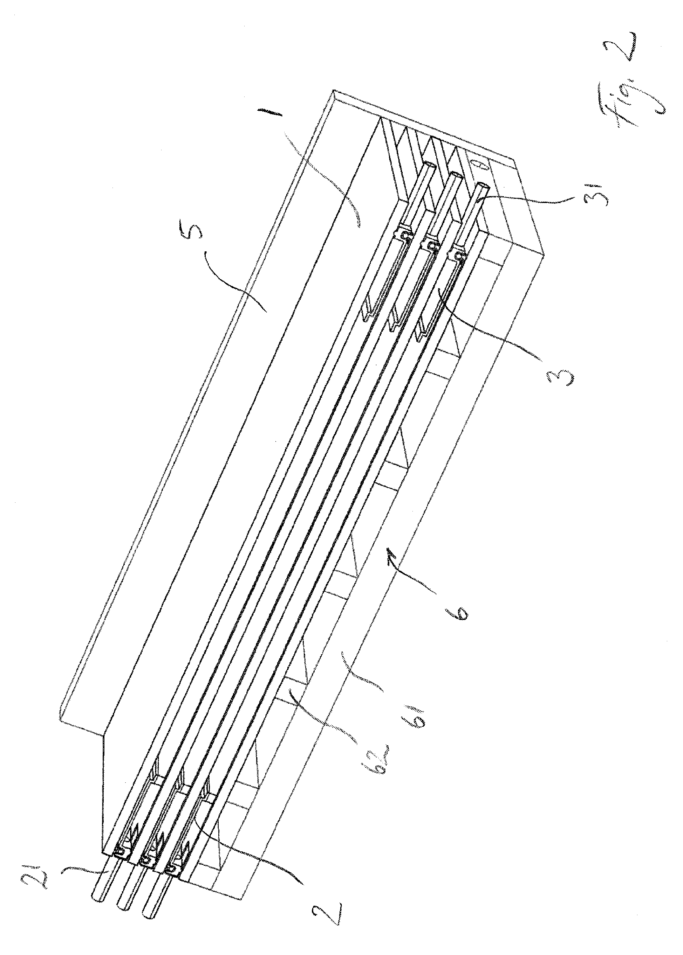

Both separator members are provided with projecting ridges 23, which come into engagement with the glass plate, when stacked as depicted in Fig. 2, where four glass plates and three sets of separator members have been stacked to form three stages. This means that there is a small space between the separator member and the glass plate.

At the top end this allows condensation even above the top separator member. To prevent vapour from escaping the system, the top separator member is equipped with a sealing strip (not shown) sealing against the glass plate at its upper edge.

At the lower end the space allows feed liquid, which has not evaporated, to exit the module. As the vapour tends to travel upwards the lost trough this opening is minimal.

A sealing ridge 24,34, which is present on the opposite side of both the top and bottom separator members comes into sealing engagement with the respective glass plates.

The top separator 2 is provided with a foam strip 25 closing the space between the lower edge of the separator member and the glass plate. When the feed liquid enters the space 26 beneath the top separator, it will be stopped by the foam strip an forced to spread out over the entire width of the glass plate. Then it will penetrate trough the foam strip and continue onto the evaporation area between the two separator members. The foam strip thus contributes to an even distribution of the feed liquid and may even have a filtering effect.

Both separator members has an offset section 27,37, which severs to separate the feed liquid from the condensate. At the top it keeps the feed fluid from rising too high, even if an excess of liquid has collected underneath the top separator member. At the bottom it keeps the residual fluid from entering the condensate collection tray 38 formed the bottom separator member.

In the embodiment shown, the separator members are identical except for the foam strip on the top member. This minimises the number of parts and thus decreases the overall cost of the module.

To optimise the energy reuse the distance between the sheet members, which is determined by the thickness of the separator members, should be as small as possible. If the distance, however, becomes too small the condensate could come into contact with the feed liquid, causing pollution of the condensate and a decrease in production. Experiments have shown, that the distance should be kept in the range of 5-10 mm, preferably 7-9 mm.

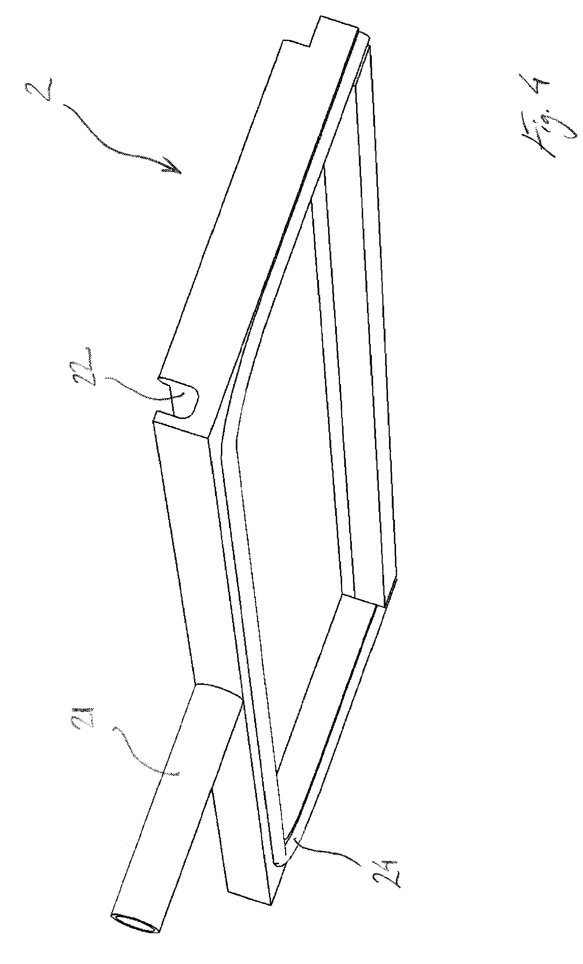

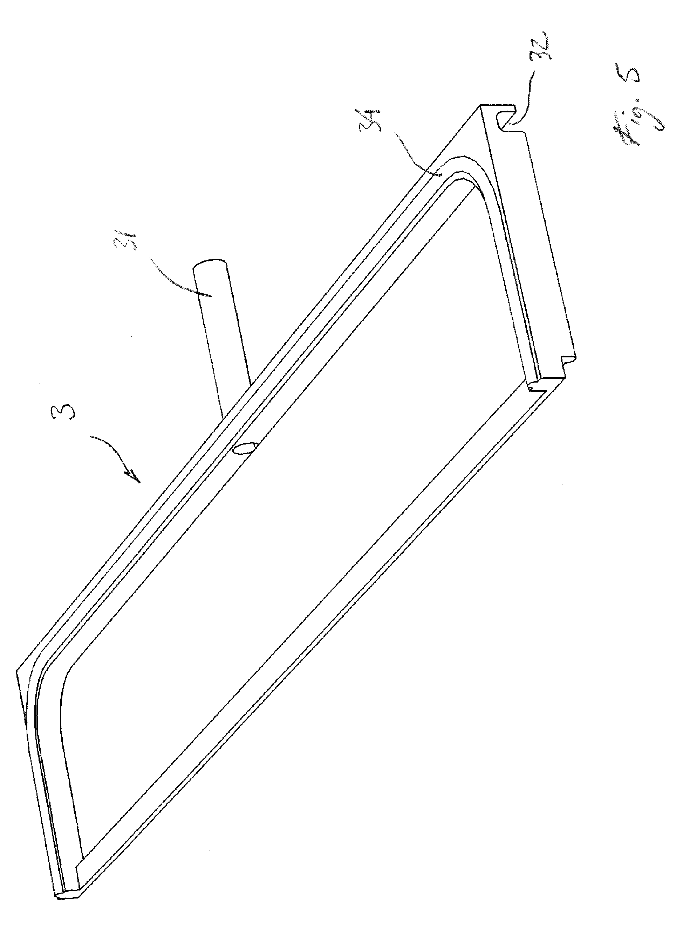

The two separator member are shown more clearly in Fig. 4 and 5.

When assembling the unit, the glass sheets are arranged between two or more frame members 5, only one of which is visible in Fig. 2. By pressing these frame members against the side edges of the glass sheets a tight module is formed. This may be achieved simply by wrapping straps around the assembly, but it is preferred to use brackets (not shown) or the like, possibly connected to a bottom element 6 underneath the stack of glass sheets, to achieve a more stable module. When maintenance is required, the assembly is simply unstrapped or the brackets loosened and damaged glass sheets may then easily be replaced.

The frame members may for example be made from glass or melamine, which is capable of withstanding the elevated temperatures and humid conditions occurring in the module. Other materials such as ceramics may, however, also be used as may a surface coating of neoprene or the like.

As mentioned above it is however also possible to assemble the module using strip-like sealing member arranged between the glass plates or the two methods could be combined for achieving an even tighter construction. Both strip sealings and the frame members may contribute considerably to the stability of the module. Frame members may also be employed at the top and bottom of the module, but must of course allow for the introduction and extraction of the liquids.

The glass plates being uninterrupted, each stage constitutes an independent unit as regards the evaporation and condensation of liquid. Only heat is transferred from one stage to another.

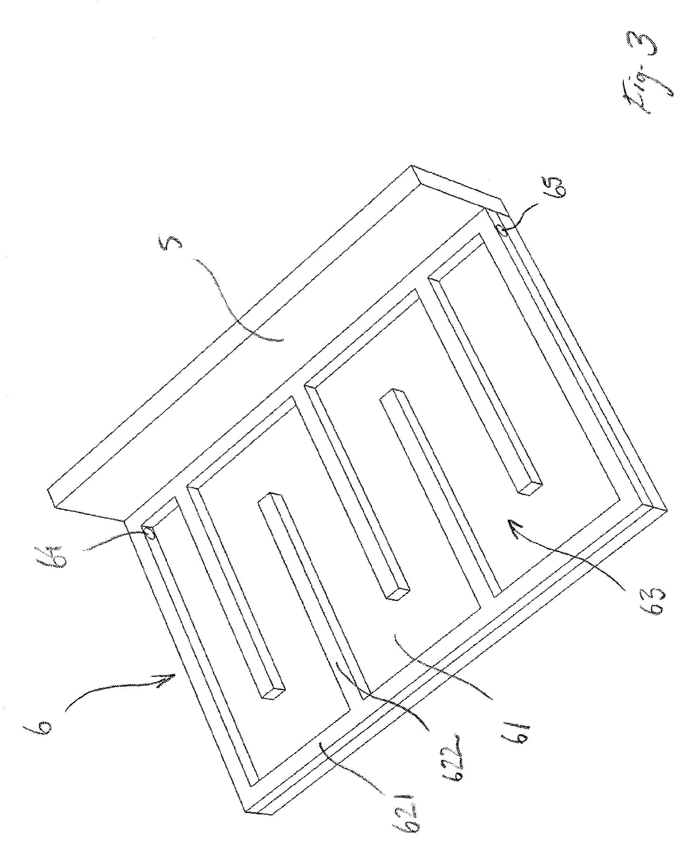

In fig. 2 the stack of three stages have been arranged on top of a bottom member 6, which consists of a bottom plate 61 and a series of distance members 62. This bottom element may be seen more clearly in fig. 3.

Apart from keeping the lowermost glass plate at a distance from the bottom plate the distance members shown serves two different purposes. Those 621, which are located at the edges of the bottom plate, serves to seal the space 63 between the glass and bottom plates from the ambient. The remaining distance members 622 are arranged in a manner resembling two intermeshing combs. Together they form a serpentine-like path stretching from an inlet opening 64 in the top-side distance member to an outlet opening 65 in the bottom-side distance member. When introducing a heating fluid trough the inlet 64 it will follow this path.

A top element (not shown) corresponding in design to the bottom element in fig. 3 may be arranged on top of stack of stages, thereby closing the upper side of the module. In this case the serpentine path will be used for passing a cooling fluid.

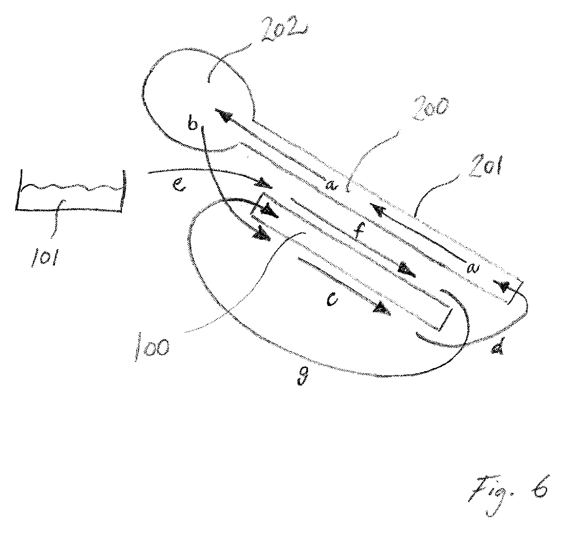

In fig. 6 the distillation module 100 described above is shown in combination with a solar collector 200 of the siphon type. When the sun hits the upper surface 201 of the solar collector the fluid within it will rise as indicated by the arrows a to reach the tank 202 at the top of the system. From there water will be pulled out under the influence of gravity as shown by the arrow b and a self circulating system will be established. If passing the fluid from the tank 202 along the underside of the distillation module as indicated by the arrow c, the distillation module will be heated. The hot fluid may be passed through a serpentine-style bottom element as described above or any other suitable means may be employed. The fluid is then returned to the solar collector as indicated by the arrow d.

Cooling of the distillation module 100 is achieved by letting the feed liquid coming from feed liquid source 101 as indicated by the arrow e pass over the upper side of the module as indicated by the arrow f before being taken back up an into the module as indicated by the arrow g. In this way the feed liquid is heated leading to an even better efficiency.

In the above the feed liquid has been exemplified with sea water, but it is to be understood, that almost any other liquid may be processed with the distillation unit an examples being the concentration of fruit juice. Similarly it is to be understood that the embodiments of the different parts of the module and system according to the invention is not to be regarded as limiting the scope of the invention, but to serves as illustration.

## Claims

1. A tilted multi effect distillation module comprising a plurality of distillation stages,
each stage being defined by a first and a second sheet member arranged in parallel to each other, the second sheet member above the first sheet member, and by one or more frame members enclosing the space between the sheet members, and
each stage comprising an inlet for supplying feed liquid to the upper surface of the first sheet member at one end thereof, at least one first outlet for extracting residual water at the other end of the first sheet member, and at least one second outlet for extracting water condensating on the second sheet member, and
where the sheet member serving as the first sheet member of one stage also serves as the second sheet member in the stage located directly below it,
**characterized in**
**that** the sheet members are plane, uninterrupted plates of tempered glass.

2. A module according to claim 1, where the first sheet member of the lowermost stage rests on a bottom element, which comprises a bottom plate and one or more distance members keeping the first sheet member at a predetermined distance from the bottom plate, so that a space is formed between them, said space being connected to a heating fluid inlet at the top of the bottom element and to a heating fluid outlet at the bottom of the bottom element.

3. A module according to claim 2, where distance members define a bottom frame surrounding the space between the bottom plate and the first sheet member, said frame providing a seal towards the ambient, and where the heating fluid inlet and the heating fluid outlet are formed in the bottom frame.

4. A module according to claim 3, where the distance members are arranged to define a serpentine path from the heating fluid inlet to the heating fluid outlet.

5. A module according to any of the preceding claims, where a top element is resting on top of the second sheet member of the uppermost stage, said top element comprising a top plate and one or more distance members, which keeps the top plate at a predetermined distance from the second sheet member, so that a space is formed between them, said space being connected to a cooling fluid inlet at the top of the top element and to a cooling fluid outlet at the bottom of the top element.

6. A module according to claim 5, where distance members defines a top frame surrounding the space between the top plate and the second sheet member, said frame providing a seal towards the ambient, and where the cooling fluid inlet and the cooling fluid outlet are formed in the top frame.

7. A module according to claim 6, where the distance members are arranged to define a serpentine path from the cooling fluid inlet to the cooling fluid outlet.

8. A module according to any of claims 5-7, where the cooling fluid inlet is connected to a feed liquid source and where the cooling fluid outlet is connected to the inlet of at least one stage.

9. A module according to any of the preceding claims, where each stage comprises one or more separator members arranged between the two sheet members.

10. A module according to claim 9, where the inlet is formed in or connected to a top separator member.

11. A module according to claim 9 or 10, where the second outlet is formed in or connected to a bottom separator member.

12. A module according to any of claims 9-11, where the separator member(s) seal the stage against the ambient at the top and/or the bottom.

13. A module according to any of the preceding claims, where all stages are sealed at the sides against the ambient by means of a side frame member, which is brought into contact with the side edges of sheet members.

14. A module according to claim 13, where the side frame members are glass plates with a surface coating of a sealing material, such as neoprene.

15. A tilted multi effect distillation system comprising a distillation module according to any of claims 1-14,
**characterized in**
**that** the heating fluid inlet is connected to a solar collector of the thermo siphon type, and
**that** the cooling fluid inlet is connected to a feed liquid source.

16. A system according to claim 15, where the distillation module is arranged underneath the solar collector.

17. A system according to claim 15 or 16, where the distillation module and the solar collector are interconnected to form a unit capable of supplying both freshwater made by distillation and hot water.

18. A system according to any of claims 15-17, further comprising at least one pump for moving the feed liquid and at least one photovoltaic element supplying energy to the pump.

19. A method of increasing the efficiency of a tilted multi effect distillation module, **characterized in that** hot fluid from a solar collector of the thermo siphon type is led along the under side of the module in a manner allowing heat transfer from the fluid to the module, and that the feed liquid to be distilled by the module are led along the upper side of the module in a manner allowing heat transfer from the module to the feed liquid.
